# EUROPÄISCHE PATENTANMELDUNG

(11) **EP 2 343 178 A1**
(43) Veröffentlichungstag der Anmeldung: **13.07.2011**
(21) Anmeldenummer: 10015113.3
(22) Anmeldetag: 30.11.2010
(51) Int. Cl.: B29C 45/44

(54) **Verfahren und Vorrichtung zum Entformen von Spritzgusshohlkörpern mit Hinterschneidungen in der Innenkontur**

(30) Priorität: 09.01.2010 DE 102010004227
(71) Anmelder: Poschmann Holding GmbH & Co. KG, 58313 Lüdenscheid (DE)
(72) Erfinder: Baukloh, Horst, 58540 Meinerzhagen (DE)
(74) Vertreter: Dörner, Kötter & Kollegen

(57) **Zusammenfassung**

Die Erfindung betrifft ein Verfahren zum Entformen von Spritzgußhohlkörpern mit Hinterschneidungen in der Innenkontur unter Verwendung eines Formkerns, der im Wesentlichen aus einem Innenkern und aus mindestens zwei Gruppen von relativ zum Innenkern verschiebbaren Segmenten besteht, die in vorgegebener Reihenfolge derart um den Innenkern angeordnet sind, dass sie in der Arbeitsposition des Formkerns zusammen mit dem Innenkern eine lückenlose Innenkontur des Spritzgußhohlkörpers bilden und in der Entformungsposition die Hinterscheidungen so freigeben, dass der Spritzgußhohlkörper vom Formkern entfernbar ist, wobei in einem ersten Schritt zwischen dem lnnenkern (6) und sämtlichen Segmenten (4, 5) eine Relativverschiebung um eine Strecke in axialer Richtung stattfindet; in einem zweiten Schritt eine definierte Gruppe von Segmenten (5) um eine definierte Strecke in radialer Richtung auf die Mittelachse des lnnenkerns (6) zu bewegt wird und nachfolgend diese Gruppe von Segmenten (5) in axialer, dem Spritzgußhohlkörper entgegengesetzter Richtung bewegt wird; in jeweils nachfolgenden Schritten die übrigen Gruppen von Segmenten in der unter (c) genannten Art bewegt werden; wobei die letzte Gruppe von Segmenten (4) lediglich in radialer Richtung auf die Mittelachse des Innenkerns (6) zu bewegt wird und wobei die radialen Bewegungen der Segmente (4, 5) über winklig angestellte Stifte (77) erfolgt, welche in Schrägbohrungen (44, 54) geführt sind, die in den Sockeln (43, 53) der Segmente (4, 5) eingebracht sind.

Die Erfindung betrifft weiterhin einen Formkern zur Durchführung eines Verfahrens der vorgenannten Art, umfassend einen lnnenkern sowie wenigstens zwei Gruppen von Segmenten, welche abwechselnd um den Innenkern angeordnet sind, wobei die Segmente (4, 5) jeweils eine Schrägbohrung (44, 54) aufweisen, in der ein Führungsstift (77) geführt ist, über den die Segmente (4, 5) in radialer Richtung bewegbar sind.

## Beschreibung

Die Erfindung betrifft ein Verfahren zum Entformen von Spritzgusshohlkörpern mit Hinterschneidungen in der Innenkontur unter Verwendung eines Formkerns nach dem Oberbegriff des Patentanspruchs 1. Die Erfindung betrifft weiterhin einen Formkern zur Durchführung des Verfahrens nach dem Oberbegriff des Patentsanspruchs 10.

Formkerne dieser Art dienen dazu, Hohlkörper aus Kunststoff oder anderen für Spritzguss geeigneten Materialen mit Innengewinde, Nasen, Vertiefungen, Kerben, Aussparungen sowie Durchbrüchen und sonstigen Hinterschneidungen in ihrer Innenkontur zu spritzen. Derartige Hohlkörper werden im Folgenden der Kürze halber als Produkt bezeichnet. Die Außenflächen des Formkerns bilden im Spritzzustand die Form für die Innenkontur des Produkts. Da diese Innenkontur Hinterschneidungen aufweist, muss der Formkern nach Beendigung der Auskühlzeit in einen Entformungszustand mit einem kleineren Außendurchmesser versetzt werden, der das Entformen des Produkts und damit seine Entfernung aus dem Spritzgusswerkzeug ermöglicht.

Die Außenkontur des Produkts wird durch eine Außenform bestimmt, in der sich gewöhnlich die Einspritzdüsen für die plastifizierte Spritzmasse befinden. Einzelheiten der Entformung der Außenkontur des Produkts sind dem Fachmann geläufig. Sie bilden keinen Bestandteil der vorliegenden Erfindung.

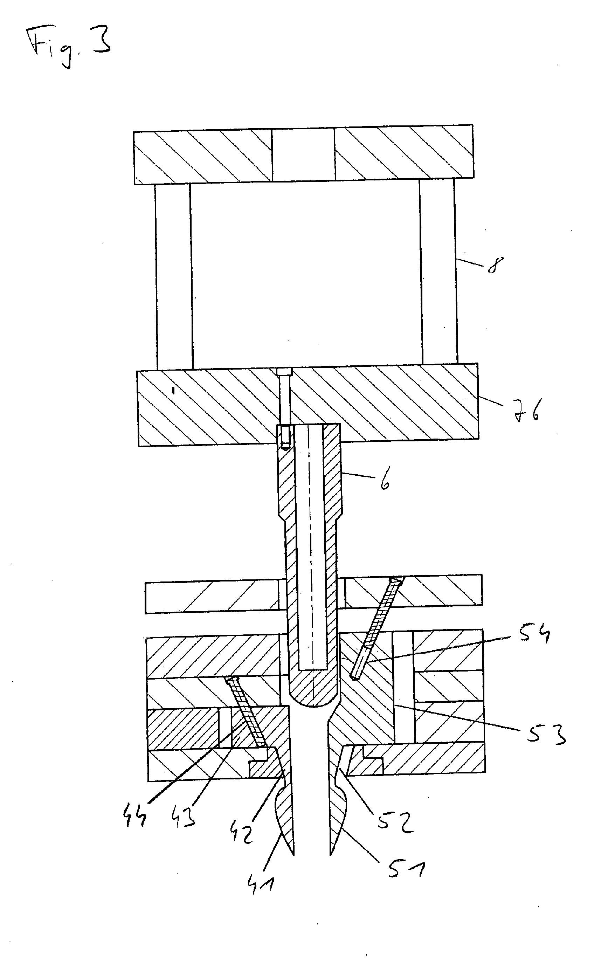

Ein Entformungsverfahren der gattungsgemäßen Art und ein zugehöriger Formkern sind beispielsweise aus der US 41 30 246 bekannt. Der dort beschriebene Formkern und der zugehörige Entformungsvorgang sind dort in den Figuren 3 a bis 3 c schematisch dargestellt. Der Formkern besteht aus einem lnnenkern und sechs Segmenten. Der lnnenkern besitzt die Form eines sechsseitigen Pyramidenstumpfes mit einem Zapfen an seiner Basis, mit dem er in einer nicht dargestellten Grundplatte des Spritzgusswerkzeuges montiert ist. Die Segmente sind in zwei Gruppen unterteilt, die jeweils nur untereinander gleiche Segmente einer ersten Art bzw. einer zweiten Art enthalten. Die Segmente der einzelnen Gruppen sind abwechselnd auf den Seitenflächen des lnnenkerns angeordnet und gegenüber diesem mittels Schwalbenschwanzführungen längs verschieblich. Die Verschieberichtung ist hierbei durch die Neigung der Seitenflächen gegenüber der Längsachse des lnnenkerns festgelegt. Diese Neigung ist für die Segmente der ersten Art größer als für diejenigen der zweiten Art. Die Flanken der Segmente der ersten Gruppe sind entweder parallel zueinander oder derart zueinander geneigt, dass eine Bewegung dieser Segmente an den Segmenten der zweiten Gruppe vorbei in Richtung auf die Längsachse des lnnenkerns zu möglich ist. Diese Richtung wird im Folgenden als radiale Richtung bezeichnet, während die dazu senkrechte, parallel zur Längsachse des Innenkerns verlaufende Richtung axiale Richtung genannte wird. Zur Entformung des Produkts nach dem Spritzvorgang werden die Segmente entlang den Seitenflächen des lnnenkerns nach vorne verfahren, d.h. in Richtung der Kernspitze. Durch die radiale Komponente dieser translatorischen Bewegung kommt es zu einer Kontraktion des Formkerns, wobei die Segmente der ersten Gruppe unter denen der zweiten Gruppe abtauchen, da die zugehörigen Seitenflächen steiler gegen die Längsachse des lnnenkerns geneigt sind, als diejenigen der anderen Segmente. Durch diese Verkleinerung des Formkerndurchmessers über die gesamte Länge des Produkts werden die Hinterschneidungen freigegeben. Das Produkt, in dessen Inneren sich während dessen noch die Segmente befinden, kann nun ausgestoßen werden. Dazu wird das Produkt von der üblicherweise vorhandenen Auswerferplatte des Spritzgusswerkzeuges weiter mitgenommen, während die Segmente stehen bleiben.

Ungünstig bei derartigen Formkernen sind die hohen Präzisionsanforderungen für die Schwalbenschwanzführungen und die daraus resultierenden erheblichen Fertigungskosten. Ein wesentlicher Nachteil liegt auch darin, dass sich dieser Formkern aufgrund seiner speziellen Kinematik schlecht für eine Standardisierung eignet. Das heißt, es handelt sich bei jedem Formkern dieser Art um eine Einzelanfertigung. Weitere Probleme liegen in der Begrenztheit der realisierbaren Produktinnenlängen und der maximal erzielbaren Hinterschneidungsverhältnisse von bis zu 12 % die insbesondere durch die Neigungswinkel der Seitenflächen bedingt ist. Unter den Hinterschneidungsverhältnis ist hierbei das Verhältnis des vom größten Innendurchmesser zum kleinsten Innendurchmesser des Produkts zu verstehen.

Hier will die Erfindung Abhilfe schaffen. Der Erfindung liegt die Aufgabe zugrunde, ein Verfahren zur Entformung von Spritzgusshohlkörpern mit Hinterschneidungen in der Innenkontur zu schaffen, welches es ermöglicht, die Anwendungsgebiete von Formkernen zu erweitern. Gemäß der Erfindung wird diese Aufgabe durch die Merkmale des kennzeichnenden Teils des Patentanspruchs 1 gelöst.

Mit der Erfindung ist ein Verfahren zur Entformung von Spritzgusshohlkörpern mit Hinterschneidungen in der Innenkontur geschaffen, welches es ermöglicht, die Anwendungsgebiete von Formkernen zu erweitern. Bei dem Verfahren gemäß der Erfindung werden die verschiedenen Gruppen von Segmenten relativ zueinander und zum lnnenkern verschoben. Dabei erfolgt zunächst eine Bewegung des lnnenkerns, wobei Raum für eine Radialbewegung der Segmente freigegeben wird. Nachfolgend wird eine definierte Gruppe von Segmenten um eine definierte Strecke in radialer Richtung auf die Mittelachse des lnnenkerns zu bewegt und darauffolgend in axialer, dem Produkt entgegengesetzter Richtung bewegt. In nachfolgenden Schritten werden die übrigen Gruppen von Segmenten in der vorgenannten Art bewegt, wobei abschließend die letzte Gruppe von Segmenten lediglich in radialer Richtung auf die Mittelachse des lnnenkerns zu bewegt wird, wonach das Produkt entnommen werden kann. Die Bewegungen der Segmente erfolgt dabei über winklig angestellte Stifte, welche in Schrägbohrungen geführt sind, die in den Sockeln der Segmente eingebracht sind. Die Bewegung über derartige schräg in den Sockeln eingebrachte Stifte ermöglicht einen einfachen Aufbau eines Formkerns mit zugleich präziser Ansteuerung der Segmente. Das maximale Hinterschneidungsverhältnis ist hierbei größer 40 %

In Weiterbildung der Erfindung werden die winklig angestellten Stifte über orthogonal zum lnnenkern angeordnete Steuerplatten bewegt, mit denen sie verbunden sind. Hierdurch ist ein kompakter Formkernaufbau ermöglicht. Bevorzugt wird auch der Innenkern über eine Steuerplatte bewegt, mit der er verbunden ist.

In Ausgestaltung der Erfindung sind die Segmente jeweils einer Gruppe in einer zugeordneten Aufnahmeplatte radial verschiebbar gelagert. Hierdurch ist eine geführte Bewegung der Segmente auf einer definierten Bahn erzielt.

In weiterer Ausgestaltung der Erfindung sind die Aufnahme- und Steuerplatten in Arbeitsposition sandwichartig übereinander gestapelt und werden innerhalb des Entformungsprozesses nacheinander in axialer, dem Spritzgusshohlkörper entgegen gesetzter Richtung verfahren. Hierdurch ist der erforderliche Arbeitsraum minimiert. Dabei wird vorteilhaft zunächst die oberste Platte verfahren und die jeweils nachfolgende Platte zu dem Zeitpunkt verfahren, sobald sie einen definierten Abstand zur vorhergehenden Platten eingenommen hat. Dabei wird bevorzugt im ersten Schritt der lnnenkern bewegt, während die Segmente ortsfest bleiben. Durch diese einfache mechanische Steuerung über sandwichartig stapelbare Arbeits- und Steuerungsplatten lassen sich separate und somit aufwendige Antriebs- und Steuerungsmaßnahmen vermeiden. Vorteilhaft erfolgen die axialen Bewegungen der Segmente über Zugstangen, welche die zugeordneten Aufnahmeplatten antreiben.

Der vorliegenden Erfindung liegt weiterhin die Aufgabe zugrunde, einen Formkern zur Durchführung des Verfahrens zu schaffen, der einfach und kostengünstig herstellbar ist und der gegenüber dem Stand der Technik deutlich grö-βere Hinterschneidungsverhältnisse und Produktlängen zulässt. Gemäß der Erfindung wird diese Aufgabe durch die Merkmale des kennzeichnenden Teils des Patentanspruchs 10 gelöst.

Mit der Erfindung ist ein Formkern zur Anwendung des Verfahrens zur Entformung von Spritzgusshohlkörpern mit Hinterschneidungen in der Innenkontur geschaffen, der einfach und kostengünstig herstellbar ist und der deutlich grö-βere Hinterschneidungsverhältnisse und Produktlängen zulässt, als herkömmliche Formkerne.

In Ausgestaltung der Erfindung sind wenigstens zwei Gruppen von unterschiedlich ausgebildeten Arten von Segmenten angeordnet. Hierdurch ist ein schlüssiges Anliegen der Segmente an den Innenkern ermöglicht.

In Weiterbildung der Erfindung weist der lnnenkern im Berührungsbereich mit den Segmenten einen konstanten Querschnitt auf. Hierdurch ist eine große gemeinsame Kontaktfläche zwischen Segment und lnnenkern erzielt, wodurch eine ungleichmäßige mechanische Belastung vermieden ist, welche zu lokal begrenztem und dadurch verstärktem Verschleiß führen kann. Außerdem erhöht dies die allgemeine Stabilität der Anordnung. Ferner ist eine möglichst große Kontaktfläche dem Wärmetransport vom Produkt durch die Segmente in den lnnenkern zuträglich. Aus spritzgusstechnischen Gründen ist es dabei besonders vorteilhaft, den lnnenkern kühlbar zu gestalten. Hierzu weist der Innenkern vorteilhaft mindestens einen Kanal auf, der von einem Kühlmittel durchströmbar ist. Alternativ oder zusätzlich kann zur Regulierung der Innenkerntemperatur auch ein Kanal zur Aufnahme von Heizelementen angeordnet sein.

In Weiterbildung der Erfindung sind die in den Schrägbohrungen der Segmente geführten Führungsstifte jeweils einer Gruppe von Segmenten mit einer Steuerplatte verbunden, über die sie bewegbar sind. Hierdurch ist ein beschleunigter, gleichmäßiger Entformvorgang ermöglicht.

Vorteilhaft sind die Segmente jeweils einer Gruppe in einer zugeordneten Aufnahmeplatte radial verschiebbar gelagert. Hierdurch ist eine definierte Führung der radialen Bewegung der Segmente erzielt.

In Ausgestaltung der Erfindung sind die Aufnahme- und Steuerplatten in Arbeitsposition sandwichartig übereinander gestapelt und innerhalb des Entformungsprozesses nacheinander in axialer, dem Spritzgusshohlkörper entgegengesetzter Richtung verfahrbar. Hierdurch ist ein kompakter Aufbau des Formkerns erzielt. Bevorzugt erfolgt die Bewegung der Segmente mit den Steuerplatten oder des Innenkerns über pneumatische, hydraulische, mechanische oder elektromechanische Antriebe. Dabei sind die Segmente vorteilhaft über Zugstangen axial verfahrbar.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Die Figuren 1 bis 11 zeigen in schematischer Darstellung und Abfolge einen erfindungsgemäßen Formkern in Arbeitsstellung (Fig. 1) und während des Entformens bis zur Auswurfposition (Fig. 7) mit nachfolgender Positionierung bis in eine erneute Arbeitsstellung (Fig. 11).

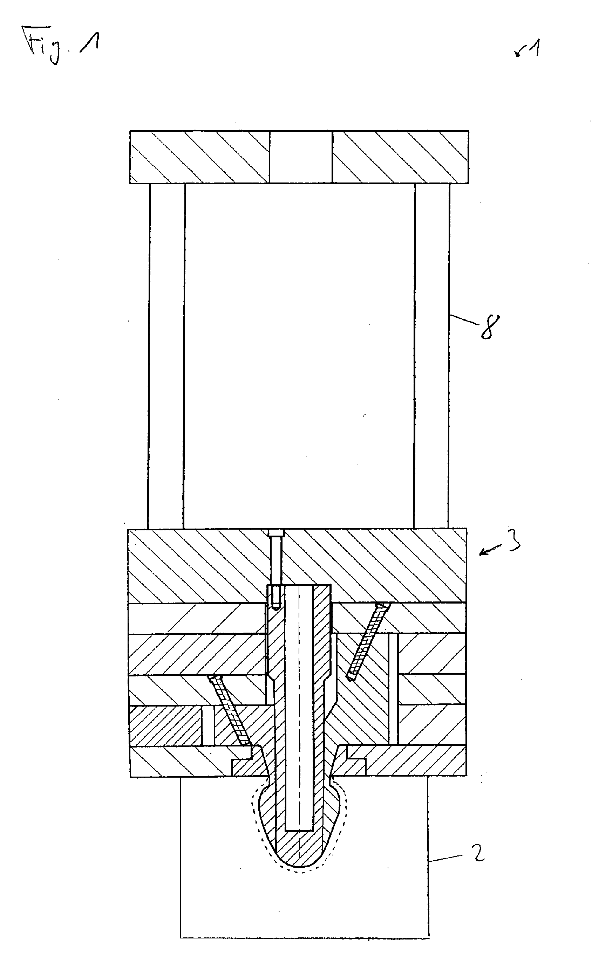

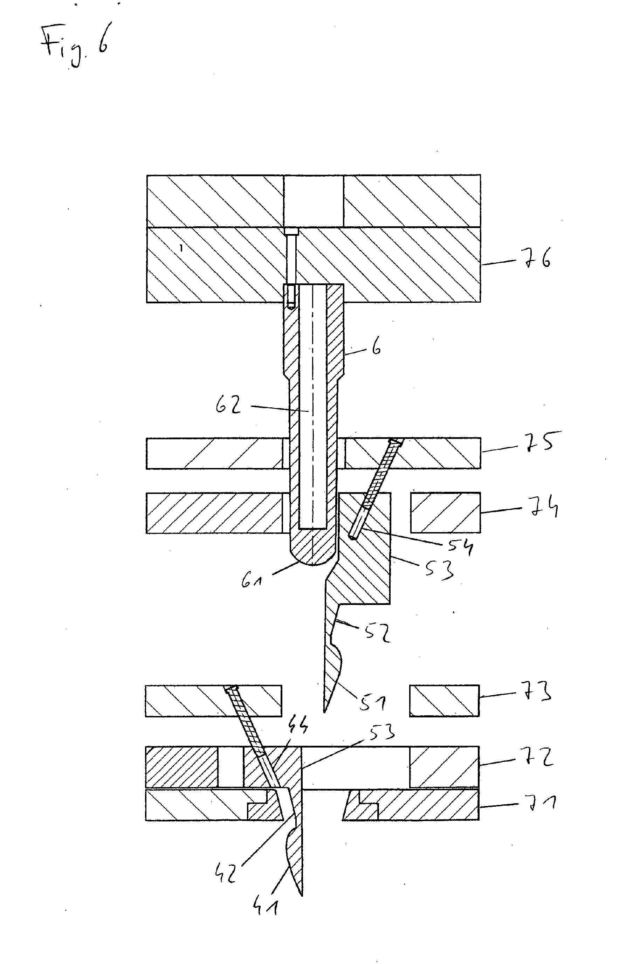

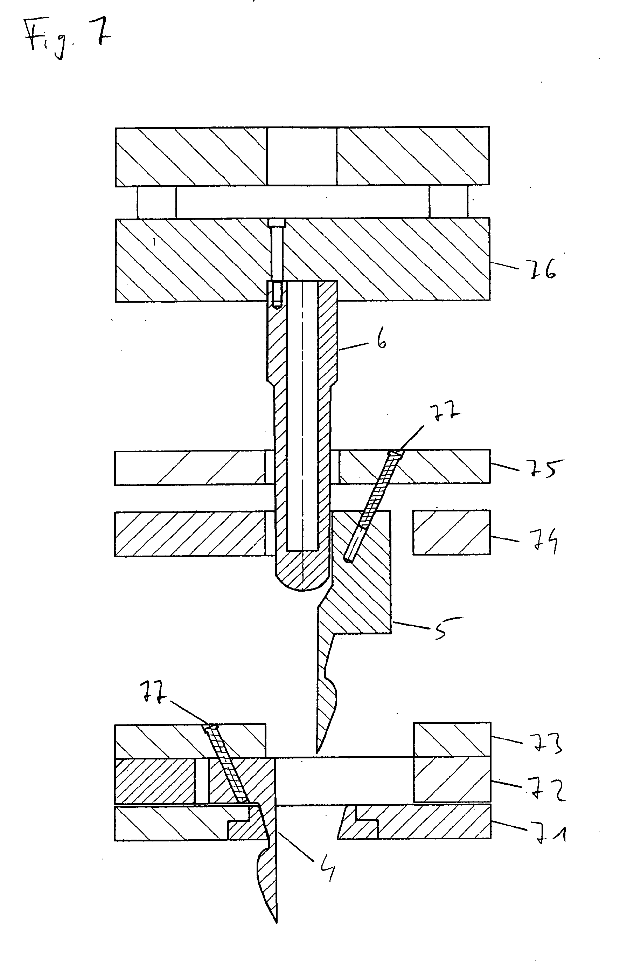

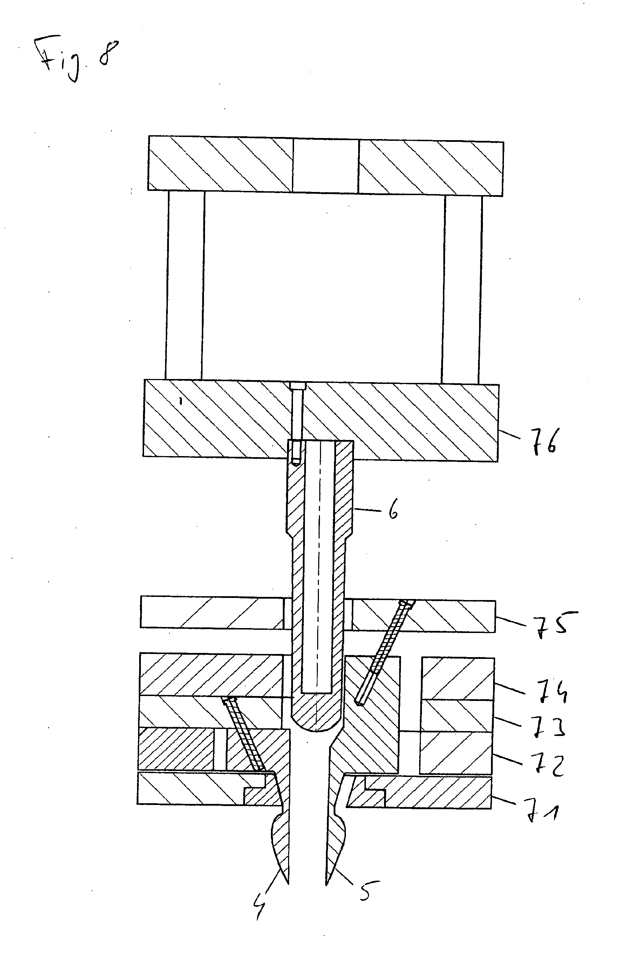

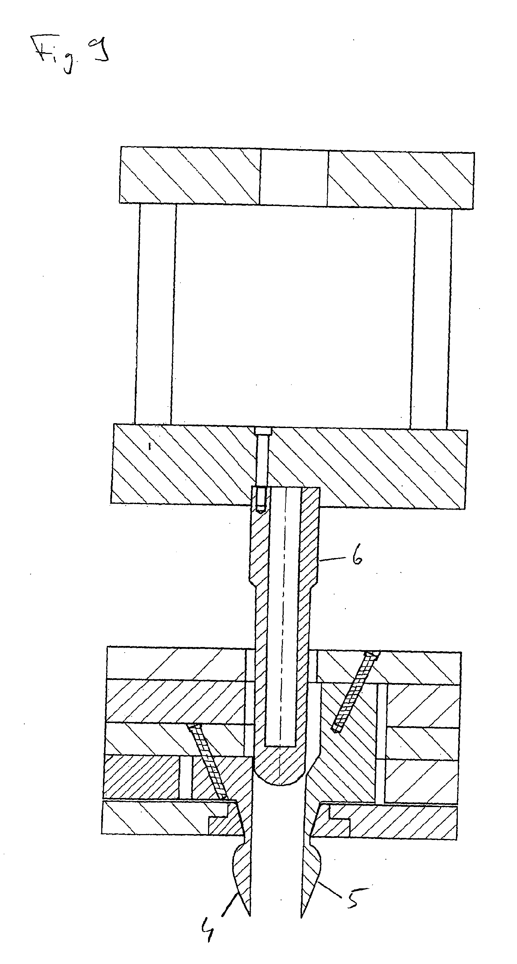

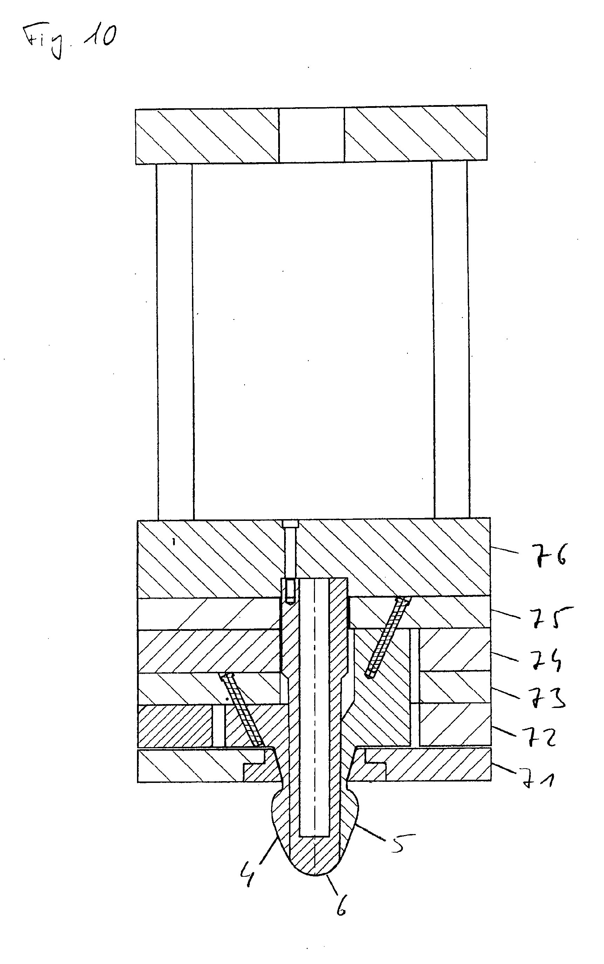

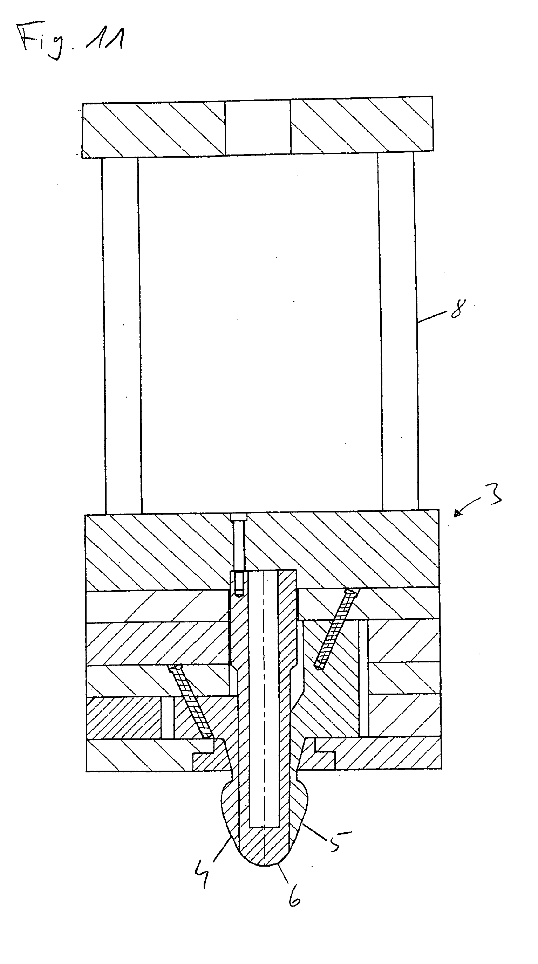

In den Figuren 1 bis 11 sind die verschiedenen Stadien des Entformungsverfahrens an Hand eines erfindungsgemäßen Formkerns 3 dargestellt. Angenommen sind zwei Gruppen von Segmenten, die jeweils aus drei Segmenten 3, 4, 5 bestehen. Zur Erhöhung der Übersichtlichkeit ist im Schnitt nur jeweils ein Segment 4, 5 jeder Gruppe gezeichnet.

Die Figur 1 zeigt einen erfindungsgemäßen Formkern 3 in Arbeitsstellung. Er bildet gemeinsam mit der - lediglich angedeuteten - Außenform 2 das Spritzgusswerkzeug 1. Der Formkern 3 besteht aus mindestens 2 Gruppen von Segmenten 4, 5, die innerhalb einer Gruppe im Wesentlichen gleich ausgebildet sind. Die Segmente 4, 5 umfassen ein Formstück 41,51, durch deren Au-βenkontur die Innenkontur des Produkts bestimmt ist. Das Formstück 41, 51 ist über eine Anlageschräge 42, 52 mit einem Sockel 43, 53 verbunden. In den Sockel 43, 53 ist eine Schrägbohrung 44, 54 zur Aufnahme eines Schräg- und Führungsstiftes 77 eingebracht.

Die Segmente 4, 5 jeweils einer Gruppe sind in einer zugeordneten Aufnahmeplatte 72, 74 radial verschiebbar gelagert. Hierzu weisen die Segmente - nicht dargestellte - Stege auf, die in - nicht dargestellte - Führungsnuten innerhalb der Aufnahmeplatte 72, 74 eingreifen, welche sich orthogonal zur Mittelachse des Innenkerns 6 erstrecken.

Die Segmente 4, 5 sind radial um einen lnnenkern 6 angeordnet. Dabei bestimmt die Außenkontur des Kopfabschnitts 61 des lnnenkerns 6 gemeinsam mit den Außenkonturen der Formstücke 41, 51 der Segmente 4, 5 die Innenkontur des Produkts. Der lnnenkern 6 ist im Ausführungsbeispiel mit einer Aufnahmeplatte 76 fest verbunden und weist einen Kanal 62 zur Aufnahme von Kühlmittel auf. Es können auch mehrere Kanäle zur Durchströmung von Kühlmittel oder auch zur Aufnahme von Heizelementen vorgesehen sein.

Die Segmente 4, 5 sind über Führungsstifte 77, welche in die Schrägbohrungen 44, 54 der Sockel 43, 53 eingreifen, mit Steuerplatten 73,75 verbunden. Dabei sind die Segmente 4, 5 jeweils einer Gruppe mit einer zugeordneten Steuerplatte 73, 75 verbunden.

In Arbeitsstellung gemäß Figur 1 sind die Aufnahmeplatten 72, 74, 76 und die Steuerplatten 73, 75 sandwichartig abwechselnd übereinanderliegend angeordnet. Die Steuerplatten 74, 75 sind dabei vom lnnenkern, der mit der zuoberst liegenden Steuerplatte 76 verbunden ist, durchdrungen. Die Anordnung von Aufnahmeplatten 72, 74, 76 und Steuerplatten 73, 75 liegt an einer Auswerferplatte 71 an, an die sich die Außenform 2 anschließt und welche gleichsam von dem lnnenkern 6 durchdrungen ist. Die Steuerplatten 74, 75 sind über Führungsstifte 77 mit den in den in Richtung der Außenform 2 benachbarten Aufnahmeplatten 74, 75 gelagerten Segmenten 4, 5 verbunden.

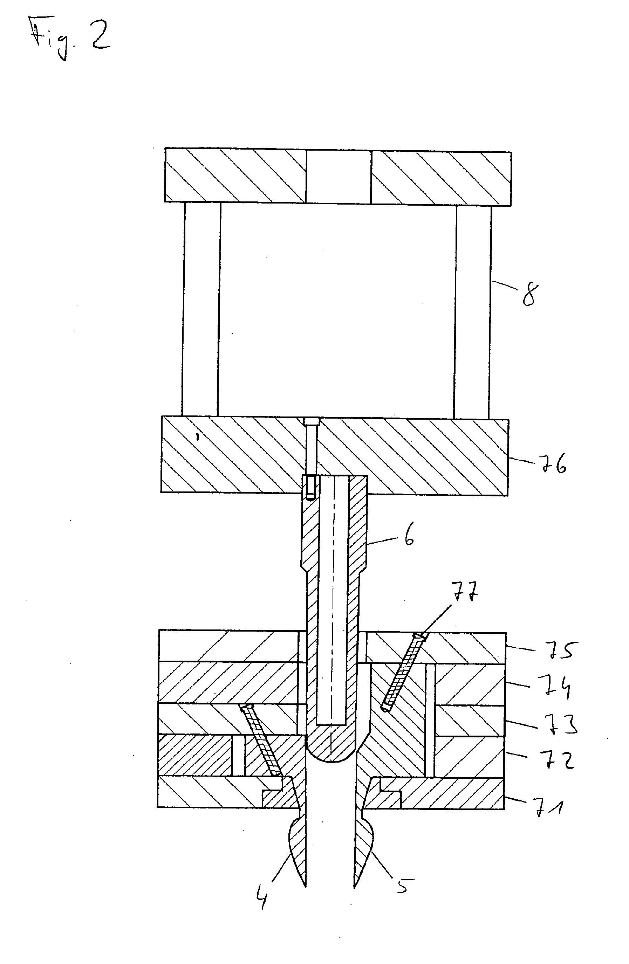

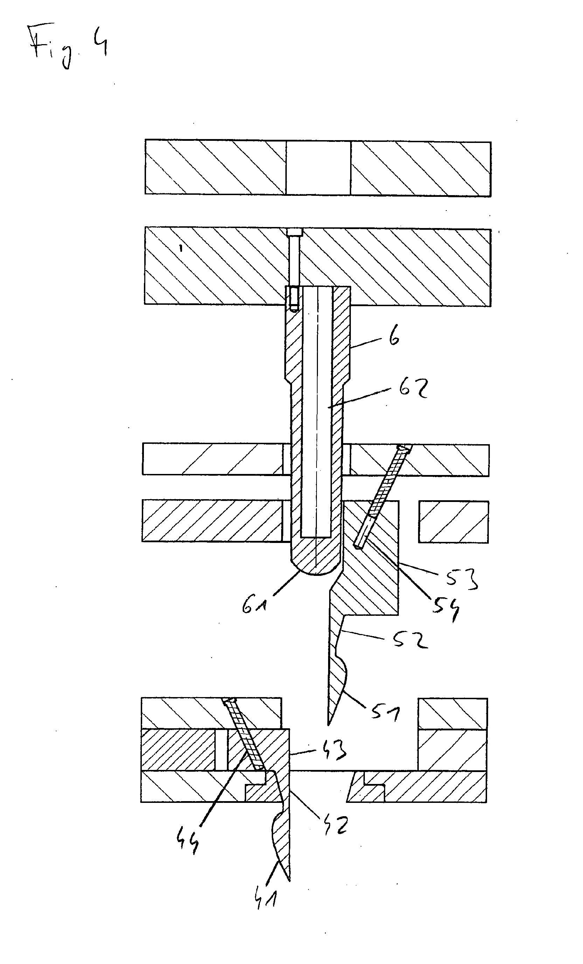

Zu Beginn des Entformungsvorgangs trennt sich zunächst die Außenform 2 vom Formkern 3. Dabei wird der Anguss abgetrennt. Im nachfolgenden zweiten Schritt verfährt die zu oberst angeordnete Aufnahmeplatte 76 mit dem an dieser befestigten Innenkern 6 axial in der der Außenform 2 entgegengesetzten Richtung (Figur 2). Im dritten Schritt verfährt die zur Aufnahmeplatte 76 benachbarte Steuerplatte 75 axial in Richtung der Aufnahmeplatte 76, wobei der Führungsstift 72 aus den Schrägbohrungen 54 der Segmente 5 herausbewegt wird. Dabei werden die Segmente 5 radial in Richtung der Mittelachse des lnnenkerns 6 bewegt. Nach Austreten der Führungsstifte 77 aus den Schrägbohrungen 54 der Segmente 5 verfährt die Aufnahmeplatte 74 mit den in dieser gelagerten Segmenten 5 axial in Richtung der Aufnahmeplatte 76 (Figur 4).

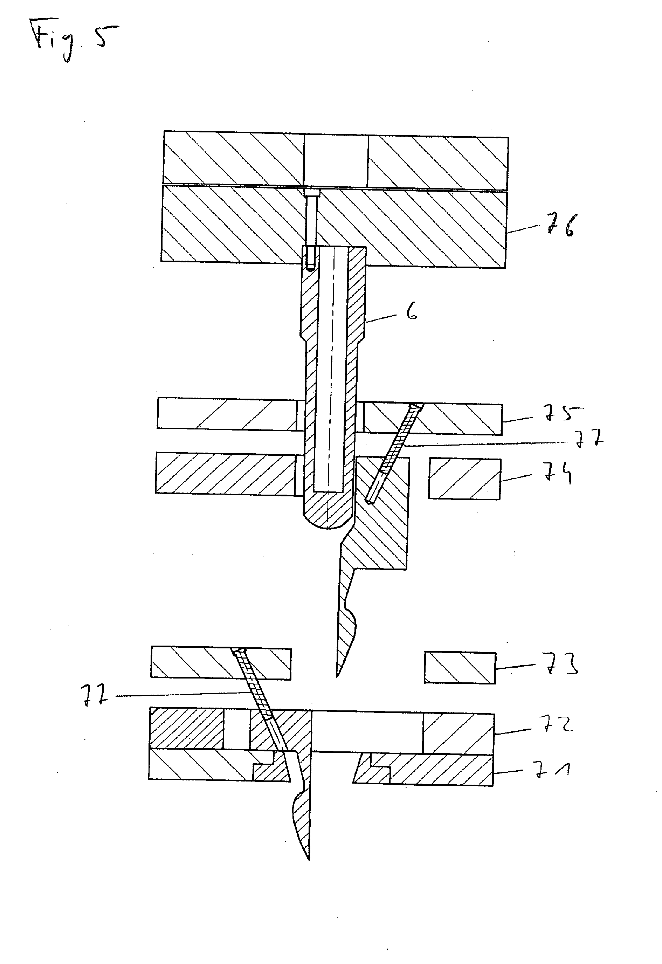

Im nachfolgenden vierten Schritt verfährt die Steuerplatte 73 axial in Richtung der Aufnahmeplatte 76, wobei die Führungsstifte 77 aus den Schrägbohrungen 44 der in der benachbarten Aufnahmeplatte 72 gelagerten Segmente 4 heraus, wodurch diese Segmente 4 radial in Richtung der Mittelachse des Innenkerns 6 bewegt werden (Figur 5). Damit haben alle Formstücke 41, 51 der Segmente 4, 5 die Hinterschneidungen des Produkts freigegeben, wodurch dieses entfernbar ist.

Die Wiederherstellung der Arbeitsposition des Formkerns erfolgt in umgekehrter Reihenfolge. Dabei bewirken die Führungsstifte 77 beim Eintritt in die Schrägbohrungen 44, 54 der Segmente 4, 5 eine Radialbewegung der Segmente 4, 5 nach außen. Haben die Segmente 4, 5 ihre Arbeitsposition erreicht, wird der lnnenkern 6 in den durch die Segmente 4, 5 gebildeten Zwischenraum eingefahren. Das Kopfstück 61 des lnnenkerns 6 bildet nun wieder mit den Formstücken 41, 51 der Segmente 4, 5 die Innenkontur des zu fertigenden Produkts. Abschließend wird die Außenform 2 an den Formkern 3 angeschlossen. Die axialen Bewegungen der Aufnahmeplatten 72, 74, 76 sowie der Steuerplatten 73, 75 erfolgt dabei über Zugstangen 8, welche mit diesen Platten verbunden sind.

Die Flanken der Segmente 5 werden zweckmäßigerweise so ausgebildet, dass sie in der Arbeitsstellung des Formkerns mit den Flanken der Segmente 4 lückenlos zusammenpassen. Durch diesen Aufbau hat der Formkern eine besonders hohe mechanische Stabilität, die auch der Belastung während des Spritzens widersteht. Zudem ist dies dem ungehinderten Wärmeübergang vom erkalteten Produkt zum üblicherweise gekühlten Innenkern besonders zuträglich.

Bei der Konstruktion eines erfindungsgemäßen Formkerns 3 ist darauf zu achten, dass sämtliche Segmente 4, 5 sowie die jeweils vorgegebenen Strecken, die in axialer Richtung verlaufen, als auch die jeweils anschließenden, durch die Führungsstifte 77 bewirkten radialen Verschiebewege so dimensioniert werden, dass ein vorzugebender Sicherheitsweg zwischen Segmentaußenseite und Produktwandung am kleinsten Produktinnendurchmesser sowie ein Sicherheitsabstand zwischen den Segmenten 4, 5 an deren Innenseite eingehalten wird. Dieser Sicherheitsweg sollte unter anderem ein Schwinden des Produkts beim Abkühlen berücksichtigen. Sollten Segmente untereinander bzw. mit dem Innenkern oder dem Produkt kollidieren, kann dies zu Schäden am Formkern 3 und / oder dem Produkt führen. Beides würde die Qualität des betreffenden bzw. nachfolgender Produkte gefährden.

Die Figuren sowie die zugehörigen Beschreibungen basieren auf rotationssymmetrischen Produkten mit umlaufenden Hinterschneidungen, da sich hierdurch das Wesen der Erfindung am einfachsten darstellen lässt. Eine Verallgemeinerung der erfindungsgemäßen Lehre auf Produkte, welche keine Rotationssymmetrie aufweisen und bei denen die Hinterschneidungen beliebiger axialer und radialer Anordnung vorliegen, ist für den Fachmann ohne weiteres möglich und soll von dem Schutzbereich der Erfindung umfasst werden. So sind beispielsweise polygonale Formen, gegebenenfalls mit abgerundeten Ecken, ovale oder allgemeine, asymmetrisch begrenzte Querschnitte herstellbar, wobei sich die Grenzen der Möglichkeiten aus einfachen geometrischen Überlegungen ergeben. Ähnliches gilt auch für die Form und Anordnung der Hinterschneidungen, die keineswegs auf umlaufende oder rotationssymmetrische Formen beschränkt sind.

## Patentansprüche

1. Verfahren zum Entformen von Spritzgusshohlkörpern mit Hinterschneidungen in der Innenkontur unter Verwendung eines Formkerns, der im Wesentlichen aus einem lnnenkern und aus mindestens zwei Gruppen von relativ zum lnnenkern verschiebbaren Segmenten besteht, die in vorgegebener Reihenfolge derart um den lnnenkern angeordnet sind, dass sie in der Arbeitsposition des Formkerns zusammen mit dem lnnenkern eine lückenlose Innenkontur des Spritzgusshohlkörpers bilden und in der Entformungsposition die Hinterscheidungen so freigeben, dass der Spritzgußhohlkörper vom Formkern entfernbar ist, **dadurch gekennzeichnet, dass**
(a) in einem ersten Schritt zwischen dem lnnenkern (6) und sämtlichen Segmenten (4, 5) eine Relatiwerschiebung um eine Strecke in axialer Richtung stattfindet
(b) in einem zweiten Schritt eine definierte Gruppe von Segmenten (5) um eine definierte Strecke in radialer Richtung auf die Mittelachse des lnnenkerns (6) zu bewegt wird und nachfolgend diese Gruppe von Segmenten (5) in axialer, dem Spritzgußhohlkörper entgegengesetzter Richtung bewegt wird,
(c) in jeweils nachfolgenden Schritten die übrigen Gruppen von Segmenten in der unter (c) genannten Art bewegt werden,
(d) wobei die letzte Gruppe von Segmenten (4) lediglich in radialer Richtung auf die Mittelachse des lnnenkerns zu bewegt wird,
wobei die radialen Bewegungen der Segmente (4, 5) über winklig angestellte Stifte (77) erfolgt, welche in Schrägbohrungen (44, 54) geführt sind, die in den Sockeln (43, 53) der Segmente (4, 5) eingebracht sind.

2. Verfahren nach Anspruch 1, **dadurch gekennzeichnet, dass** die winklig angestellten Stifte (77) über orthogonal zum Innenkern (6) angeordnete Steuerplatten (73, 75), mit denen sie verbunden sind, bewegt werden.

3. Verfahren nach Anspruch 2, **dadurch gekennzeichnet, dass** die Segmente (4, 5) einer Gruppe in einer zugeordneten Aufnahmeplatte (72, 74) verschiebbar gelagert sind.

4. Verfahren nach Anspruch 3, **dadurch gekennzeichnet, dass** die axialen Bewegungen der Segmente (4, 5) über Zugstangen (8) erfolgen, welche die zugeordneten Aufnahmeplatten (72, 74) antreiben.

5. Verfahren nach einem der vorgenannten Ansprüche, **dadurch gekennzeichnet, dass** der lnnenkern (6) über eine Steuerplatte (76) bewegt wird, mit der er verbunden ist.

6. Verfahren nach Anspruch 2 oder 3, **dadurch gekennzeichnet, dass** die Aufnahme- und Steuerplatten (72, 73, 74, 75, 76) in Arbeitposition sandwichartig abwechselnd übereinander gestapelt sind und innerhalb des Entformungsprozesses nacheinander in axialer, dem Spritzgußhohlkörper entgegengesetzter Richtung verfahren werden.

7. Verfahren nach Anspruch 6, **dadurch gekennzeichnet, dass** zunächst die oberste Aufnahme- bzw. Steuerplatte verfahren wird, wobei eine Aufnahmeplatte (72, 74) jeweils zu dem Zeitpunkt verfahren wird, sobald die Führungsstifte (77) aus den Schrägbohrungen (44, 54) der von dieser Aufnahmeplatte (72, 74) aufgenommenen Segmente ausgetreten sind.

8. Verfahren nach einem der vorgenannten Ansprüche, **dadurch gekennzeichnet, dass** im ersten Schritt der lnnenkern (6) bewegt wird, während die Segmente (4, 5) ortsfest bleiben.

9. Formkern zur Durchführung eines Verfahrens nach einem der vorgenannten Ansprüche, umfassend einen lnnenkern sowie wenigstens zwei Gruppen von Segmenten, welche abwechselnd um den Innenkern angeordnet sind, **dadurch gekennzeichnet, dass** die Segmente (4, 5) jeweils eine Schrägbohrung (44, 54) aufweisen, in der ein Führungsstift (77) geführt ist, über den die Segmente (4, 5) in radialer Richtung bewegbar sind.

10. Formkern nach Anspruch 9, **dadurch gekennzeichnet, dass** der Innenkern (6) im Berührungsbereich mit den Segmenten (4, 5) einen konstanten Querschnitt aufweist.

11. Formkern nach Anspruch 9 oder 10, **dadurch gekennzeichnet, dass** der lnnenkern (6) mindestens einen Kanal (62) aufweist, der von einem Kühlmittel durchströmbar ist oder Heizelemente aufnehmen kann.

12. Formkern nach einem der Ansprüche 9 bis 11, **dadurch gekennzeichnet, dass** die in den Schrägbohrungen (44, 54) der Segmente (4, 5) geführten Führungsstifte (77) einer Gruppe von Segmenten (4, 5) jeweils mit einer zugeordneten Steuerplatte (73, 75) verbunden sind, über die sie bewegbar sind.

13. Formkern nach einem der Ansprüche 9 bis 12, **dadurch gekennzeichnet, dass** die Segmente (4, 5) jeweils einer Gruppe in einer zugeordneten Aufnahmeplatte (72, 74) radial verschiebbar gelagert sind.

14. Formkern nach Anspruch 13, **dadurch gekennzeichnet, dass** die Aufnahme- und Steuerplatten (72, 73, 74, 75, 76) in Arbeitposition sandwichartig übereinander gestapelt sind und innerhalb des Entformungsprozesses nacheinander in axialer, dem Spritzgußhohlkörper entgegengesetzter Richtung verfahrbar sind.

15. Formkern nach einem der Ansprüche 9 bis 14, **dadurch gekennzeichnet, dass** die Bewegung der Segmente (4, 5) und des Innenkerns (6) über pneumatische, hydraulische, mechanische oder elektromechanische Antriebe erfolgt.
